# EUROPÄISCHE PATENTSCHRIFT

(11) **EP 1 726 926 B1**
(45) Veröffentlichungstag und Bekanntmachung des Hinweises auf die Patenterteilung: **22.03.2017**
(21) Anmeldenummer: 05104522.7
(22) Anmeldetag: 26.05.2005
(51) Int. Cl.: G01G 21/24

(54) **Parallelführung für kompakte Wägesysteme**
Parallel guide for a compact weighing system.
Guidage parallèle pour un système de pesée compact.

(43) Veröffentlichungstag der Anmeldung: 29.11.2006
(73) Patentinhaber: Mettler-Toledo GmbH, 8606 Greifensee (CH)
(72) Erfinder: Genoud, Dominique, 8610, Uster (CH); Burkhard, Hans-Rudolf, Wila, 8492 (CH); Emery, Jean-Christophe, 8005, Zürich (CH)
(74) Vertreter: Mettler-Toledo

(56) Entgegenhaltungen:
- DE-A1- 10 242 118
- DE-U1- 29 917 940
- GB-A- 2 124 396
- GB-B- 2 124 396
- US-A- 4 433 742
- US-A- 4 467 883
- US-A- 4 497 386
- US-A- 4 585 083
- US-A- 4 838 371

## Beschreibung

Die vorliegende Erfindung bezieht sich auf ein Wägemodul beziehungsweise auf eine Vorrichtung zum Wiegen gleich gearteter Wägegüter mit einer vorgegebenen Anzahl dieser Wägemodule, die je einen Lastaufnehmer aufweisen der jeweils durch ein Kraftübertragungsgestänge mit einer Wägezelle verbunden ist wobei jedes Kraftübertragungsgestänge durch eine zugeordnete Parallelführung in Lastrichtung geführt wird.

Eine Vorrichtung zum Wiegen gleich gearteter Wägegüter findet bevorzugt in automatisierten Produktions- und Testanlagen ihren Einsatz, wobei für eine Integration in diese Anlagen insbesondere Waagen in modularer Ausführung - so genannte Wägemodule - geeignet sind. Dabei handelt es sich im Wesentlichen um Waagen, bei denen die Anzeigeeinheit von der Waage getrennt angeordnet ist, beispielsweise in einer Anlage mit einer zentralen Anzeige für mehrere Wägemodule. Einsatzgebiete von solch integrierten Wägemodulen sind Anlagen für die Produktion und Überprüfung von kleinen, relativ teueren Teilen, beispielsweise in Abfüll- und Verpackungsmaschinen für Tabletten, Kapseln, Ampullen, etc. in der Pharmaindustrie, oder bei der Kontrolle von Kugellagern. Beim Wiegen gleichgearteter Wägegüter oder auch dem so genannten Batch- Wiegen handelt es sich um einen Vorgang bei dem mehrere Lasten individuell zu wiegen sind, sei dies zum Zwecke des Kontrollierens, des Dosierens oder des Abfüllens etc. auf engem Raum.

Da die Wägegüter mittels einer Beschickungsvorrichtung, beispielsweise einem Roboterarm mit Mehrfachgreifer, auf die einzelnen Lastaufnehmer der Wägemodule aufgebracht beziehungsweise nach dem Wägevorgang wieder entfernt werden, müssen die Positionen der einzelnen Lastaufnehmer zueinander und gegenüber der Beschickungseinrichtung genau und dauerhaft positioniert sein.

Derartige Vorrichtungen zum Wiegen gleich gearteter Wägegüter sind im Stand der Technik bekannt. Dabei handelt es sich vorwiegend um Reihen- oder Flächenanordnungen von Wägemodulen. Weitere Anordnungen stellen darauf ab, die Wägemodule in einer Flächenanordnung satellitenartig um eine Reihenanordnung von Lastträgern, welche an die Abstände der Zufuhrelemente einer vorhandenen Beschickungsvorrichtung anzupassen sind zu platzieren, da häufig das Wägemodul zu gross ist, um entsprechend kleine Abstände einzuhalten.

Eine Flächenanordnung von Wägezellen offenbart die JP01212327 A, welche eine preisgünstige Methode zur Herstellung einer Vielzahl von mit Dehnmessstreifen als Sensor beaufschlagten Wägezellen aus einer Platte aus Federmaterial beschreibt. Diese mit Dehnmessstreifen arbeitenden Wägezellen eignen sich im Gegensatz zu einer nach dem Prinzip der elektromagnetischen Kraftkompensation arbeitenden Wägezelle jedoch nicht für den Anwendungsbereich einer Massebestimmung im Mikrogramm- bis Grammbereich.

Die DE 299 17 940 U1 offenbart eine Vorrichtung zur gravimetrischen Prüfung von Mehrkanalpipetten. Die Vorrichtung weist mehrere Wägezellen auf, die in einer Ebene satellitenförmig oder nebeneinander angeordnet sind. Um die Prüfvolumen einer Mehrkanalpipette simultan verwiegen zu können, sind die Lastaufnehmer der Wägezellen eng nebeneinander angeordnet. Bei einer satellitenförmigen Anordnung können relativ grosse Wägezellen zur Prüfung von Mehrkanalpipetten verwendet werden.

In CH 654 412 A5 wird eine Wägezelle offenbart, die nach dem Prinzip eines Einsaitenschwingers arbeitet. Mittels zwei mäanderförmig ausgebildeten Federelementen wird der Lastaufnehmer gegenüber der Konsole im Sinne einer Parallelführung geführt. Die Messgenauigkeit dieser Wägezellen wird massgeblich dadurch beeinflusst, dass die zu messende Kraft im ganzen Lastbereich stets in der gleichen Richtung auf die Saite ausgeübt wird. Durch die mäanderförmige Anordnung der Lenkerarme gleichen sich die Längenänderungen der Lenkerarme zueinander aus, so dass sich die Position des Lastaufnehmers infolge sich ändernder Temperaturen gegenüber der Konsole nicht verschiebt.

In einer nach dem Prinzip der elektromagnetischen Kraftkompensation arbeitenden Wägezelle wird die Kraft, die durch eine Last auf der Waagschale verursacht wird, durch ein Kraftkompensationsglied, das aus einem Permanentmagneten und einer Spule besteht, kompensiert, wobei der durch die Spule fliessende Strom zur Erzeugung der Kompensationskraft gemessen wird. Dieser Messwert ist proportional zur aufgelegten Last. Dieser Messwert ist aber auch abhängig von der Position der Spule im Magnetfeld des Permanentmagneten und deshalb muss die Spule beim Erfassen des Messwertes stets dieselbe Position gegenüber dem Magneten aufweisen. Die Position der Spule nach Aufbringen der Last wird über einen Lagegeber ermittelt und der Strom an der Spule solange erhöht, bis die von der Last verursachte Verschiebung der Spule gegenüber dem Permanentmagneten kompensiert ist. Dabei erfolgt die Messung des Spulenstroms, welcher ein Mass für das Gewicht der aufgelegten Last darstellt. Eine solche Wägezelle wird in CH 638 894 A5 offenbart, wobei die Wägezelle zwischen dem Lastaufnehmer und dem Kraftkompensationsglied eine Kraftübertragungsvorrichtung aufweist, welche die von der Last erzeugte Kraft am Lastaufnehmer an das Kraftkompensationsglied überträgt und je nach Lastbereich unter- oder übersetzt.

Eine nach demselben Prinzip arbeitende Wägezelle wird in CH 593 481 A5 offenbart. In dieser Patentschrift ist der Lastaufnehmer direkt mit dem Kraftkompensationsglied über ein Kraftübertragungsgestänge gekoppelt. Am Kraftübertragungsgestänge ist die bewegliche Seite des Lagegebers angebracht, während die feststehende Seite des Lagegebers mit dem gehäusefesten Bereich der Wägezelle, beziehungsweise mit dem feststehenden Bereich des Kraftkompensationsglieds, starr verbunden ist. Diese als Direktmessprinzip bezeichnete Anordnung wird vorzugsweise im Niederlastbereich eingesetzt. Da der Lagegeber über eine begrenzte Auflösung verfügt, hängt die Präzision der Messung wesentlich von der Auflösung des Lagegebers ab.

Der Lastaufnehmer sowie die Spule der Kraftkompensationsvorrichtung müssen gegenüber dem feststehenden Bereich der Wägezelle präzise geführt werden. Dies geschieht über eine Parallelführung, deren beweglicher Parallelschenkel mit dem Kraftübertragungsgestänge verbunden ist und deren feststehender Parallelschenkel mit dem gehäusefesten Bereich der Wägezelle starr verbunden ist. Der bewegliche Parallelschenkel und der feststehende Parallelschenkel sind durch zwei biegesteife Parallellenker mittels Dünnstellenbiegelager miteinander verbunden. Es können jedoch auch federnde Parallellenker eingesetzt werden, dann entfallen die Dünnstellenbiegelager. Beim Auflegen einer Last auf den Lastaufnehmer verschiebt sich das Kraftübertragungsgestänge in Lastrichtung, was eine Auslenkung der Parallellenker zur Folge hat und die Dünstellenbiegelager oder elastischen Parallellenker biegt. Diese Dünnstellenbiegelager beziehungsweise elastischen Parallellenker verursachen analog einem Blattfederelement ein, der Biegerichtung entgegenwirkendes, proportional zum Auslenkwinkel der Parallellenker erzeugtes Drehmoment beziehungsweise eine der Lastrichtung entgegenwirkende Kraft. Je massiver diese Dünnstellenbiegelager oder elastischen Parallellenker ausgestaltet werden, desto grösser ist die Lastdifferenz, die zur minimal detektierbaren Verschiebung des Lagegebers notwendig ist. Somit beeinflusst die Dimensionierung der Biegelager beziehungsweise der elastischen Parallellenker ebenfalls wesentlich das Auflösungsvermögen der Wägezelle. Nachteilig bei den im Stand der Technik offenbarten Parallelführungen ist, dass die maximal zulässige Beanspruchung des verwendeten Materials einer Verjüngung der Dünnstellenbiegelager Grenzen setzt und die Parallelführung durch die Verjüngung der Biegelager oder der elastischen Parallellenker gegenüber Überlasten sehr empfindlich wird. Um diese Problematik zu entschärfen, können die Parallellenker verlängert werden. Damit wird der Auslenkwinkel an den Biegelagern bei gegebener minimal detektierbarer Verschiebung der Abtastung verringert. Dies ergibt jedoch für Wägemodule, die in einer Vorrichtung zum Wiegen gleichgearteter Wägegüter eingesetzt werden sollen, sehr unvorteilhafte Abmessungen, die zu teuren, voluminösen und komplizierten Vorrichtungen führen.

Aufgabe der vorliegenden Erfindung ist es daher, ein Wägemodul mit einer möglichst geringen Ausdehnung in der Ebene orthogonal zur Lastrichtung zu schaffen, ohne die Messwertauflösung der geringen Dimensionen des Moduls wegen negativ zu beeinflussen.

Gelöst wird diese Aufgabe mit den Merkmalen des Anspruchs 1. Ein Wägemodul beinhaltet einen Lastaufnehmer und eine mit diesem Lastaufnehmer durch ein Kraftübertragungsgestänge verbundene Wägezelle, wobei das Wägemodul in einem Bauraum angeordnet ist, dessen Ausdehnung in der Ebene orthogonal zur Lastrichtung durch die Bauräume benachbarter Wägezellen begrenzt ist oder der grössten Ausdehnung der Wägezelle in dieser Ebene entspricht. Die Wägezelle beinhaltet eine Parallelführung, welche mindestens einen mit dem Kraftübertragungsgestänge verbundenen beweglichen Parallelschenkel und mindestens einen feststehenden Parallelschenkel aufweist, wobei diese Parallelschenkel in einem vordefinierten Führungsabstand zueinander angeordnet und durch mindestens einen oberen Parallellenker und mindestens einen unteren Parallellenker miteinander verbunden sind. Als Mittel zur Reduktion der erforderlichen minimalen Auslenkkraft des beweglichen Parallelschenkels bei orthogonal zur Lastrichtung möglichst geringen Dimensionen des Wägemoduls, ist die tatsächliche gestreckte Länge beziehungsweise die Länge der biegespannungsneutralen Faser der Parallellenker inklusive den dazu gehörenden Verbindungsstellen mit den Parallelschenkeln und sofern vorhanden, der zum Parallellenker gehörenden Dünnstellenbiegelager grösser als der Führungsabstand. Ferner ragt der bewegliche Parallelschenkel nicht über den Bauraum hinaus.

Mit Führungsabstand wird der direkte Abstand zwischen dem beweglichen Parallelschenkel und dem feststehenden Parallelschenkel bezeichnet. Dabei ist es unerheblich wie die Parallellenker, welche die beiden Schenkel verbinden, ausgestaltet sind.

Die tatsächliche gestreckte Länge beziehungsweise die Länge der biegespannungsneutralen Faser eines Parallellenkers inklusive den dazu gehörenden Verbindungsstellen mit den Parallelschenkeln und - sofern vorhanden - der zum Parallellenker gehörenden Dünnstellenbiegelager wird in der Folge als Wirklänge bezeichnet. Die Wirklänge des oberen Parallellenkers sollte gegenüber der Wirklänge des unteren Parallellenkers identisch sein, da sonst eine präzise Parallelführung kaum möglich ist.

Um die Fertigung der Wägemodule zu vereinfachen und eine einfache Austauschbarkeit einzelner Wägemodule in einer Vorrichtung zum Wiegen gleichgearteter Wägegüter zu gewährleisten, dürfen zudem keine Teile der Parallelführung orthogonal zur Lastrichtung über die Wägezelle hinausragen. Deshalb muss der beweglichen Parallelschenkel innerhalb des Bauraums des entsprechenden Wägemoduls angeordnet sein. Im äussersten Falle kann die Aussenkontur des beweglichen Parallelschenkels oder des feststehenden Parallelschenkels der Aussenkontur der Bauraum- Querschnittfläche orthogonal zur Lastrichtung entsprechen.

Durch die Gestaltung der Parallelführung des Kraftübertragungsgestänges gemäss dem Anspruch 1 entsteht nur eine geringe Rückstellkraft durch die Biegelager oder elastischen Parallellenker und damit eine geringe Beeinträchtigung der Messwertauflösung bei gleichzeitig sehr geringen Abmessungen.

Die Parallellenker können federnd ausgestaltet und starr mit dem feststehenden Parallelschenkel und mit dem beweglichen Parallelschenkel verbunden sein. Ebenso sind vergleichsweise starre Parallellenker einsetzbar, die über Dünnstellenbiegelager mit dem feststehenden Parallelschenkel und mit dem beweglichen Parallelschenkel verbunden sind.

In einer Ausgestaltung sind die Parallelführungen aus Einzelteilen bestehend aufgebaut, wobei die einzelnen Teile wie feststehender Parallelschenkel, beweglicher Parallelschenkel, Dünstellenbiegelager und Parallellenker durch Befestigungsmittel wie Schrauben, Nieten und dergleichen miteinander verbunden werden.

In einer weiteren Ausgestaltung weist die Parallelführung einen oberen Parallellenker auf, der mit einem oberen feststehenden Parallelschenkel und mit einem oberen beweglichen Parallelschenkel monolithisch verbunden ist. Desgleichen ist auch der untere Parallellenker mit einem unteren feststehenden Parallelschenkel und mit einem unteren beweglichen Parallelschenkel monolithisch verbunden. Der obere und der untere feststehende Parallelschenkel ist direkt oder über Zwischenstücke am Wägezellengehäuse festgelegt, während der obere und untere bewegliche Parallelschenkel durch das Kraftübertragungsgestänge miteinander verbunden sind.

Die Parallelführung kann zwischen der Wägezelle und dem Lastaufnehmer angeordnet und durch den beweglichen Parallelschenkel mit dem Kraftübertragungsgestänge verbunden sein.

Ebenso möglich ist die Anordnung, dass der obere Parallellenker zwischen der Wägezelle und dem Lastaufnehmer angeordnet, mit dem Kraftübertragungsgestänge durch einen oberen beweglichen Parallelschenkel verbunden ist und der untere Parallellenker auf der dem Lastaufnehmer abgewandten Seite der Wägezelle angeordnet mit dem in Lastrichtung über die Wägezelle hinaus verlängerten Kraftübertragungsgestänge durch einen unteren beweglichen Parallelschenkel verbunden ist.

Vorzugsweise sind die Parallelführungen aus einem einstückigen Materialblock oder einer Platte gefertigt wobei die materialfreien Bereiche durch Bohren und Fräsen, Wasserstrahlschneiden, Laserschneiden, Stanzen aber auch mittels Funkenerosion erzeugt werden.

Solche Parallelführungen können verschiedenste Ausgestaltungsformen aufweisen. Beispielsweise sind mäanderförmig in einer Ebene orthogonal zur Lastrichtung gefaltete Parallellenker möglich. Wird eine derart mäanderförmig ausgebildete Parallelführung in Lastrichtung oder gegen die Lastrichtung gestreckt, so dass der bewegliche Parallelschenkel in einer Ebene orthogonal zur Lastrichtung parallel beabstandet zur Ebene des feststehenden Parallelschenkel angeordnet ist, sind die Parallellenker pyramidenartig mäanderförmig ausgebildet.

Eine weitere Ausgestaltung einer Parallelführung mit mäanderförmig ausgebildeten Parallellenkern besteht darin, dass die Parallellenker in einer, eine die Lastrichtung enthaltenden Ebene gefaltet sind.

Auch konzentrisch profilierte Parallelführungsmembranen deren Querschnittprofil trapezförmig sägezahnförmig oder sinusförmig ausgestaltet ist, sind verwendbar.

Flache Parallelführungsmembranen können rechtwinklig zu ihrer ausgedehnten Ebene spiralförmig durchbrochen oder konzentrisch durchbrochen sein. Konzentrisch durchbrochene Parallelführungsmembranen weisen ringförmige Federsegmente auf, die mit mindestens einem Steg pro Durchbruch untereinander sowie mit dem feststehenden Parallelschenkel und mit dem beweglichen Parallelschenkel verbunden sein müssen. Diese Stege sind gegeneinander versetzt angeordnet, um die Steifigkeit der Parallelführungsmembran möglichst gering zu halten. Werden spiral- oder konzentrisch durchbrochen ausgebildete Parallelführungsmembranen in Lastrichtung oder gegen die Lastrichtung gestreckt, so dass der bewegliche Parallelschenkel in einer zur Ebene des feststehenden Parallelschenkels parallelen Ebene beabstandet angeordnet ist, sind die Parallellenker kegelförmig spiralförmig oder kegelförmig konzentrisch durchbrochen ausgebildet.

Mittels linearer Schnitte senkrecht zu ihrer ausgedehnten Ebene kann in der Parallelführungsmembrane auch eine Zusammenschaltung von Blattfedern gebildet werden.

Bei allen Parallelführungen die mäanderförmig ausgebildete Parallellenker aufweisen oder bei allen Parallelführungen mit Parallelführungsmembranen ist besonders darauf zu achten, dass bei Vorhandensein mehrerer oberer Parallellenker und mehrerer unterer Parallellenker, die zwischen dem feststehenden Parallelschenkel und dem beweglichen Parallelschenkel angeordnet sind, diese eine zueinander symmetrische Anordnung aufweisen, so dass sich der bewegliche Parallelschenkel nur in Lastrichtung oder gegen die Lastrichtung verschieben kann und nicht infolge asymmetrischer Belastungen zwischen den einzelnen oberen und/oder den einzelnen unteren Parallellenkern gegenüber der Lastrichtung, abkippt.

Eine Zusammenstellung von Membranfedern ist in Krause, W.: Konstruktionselemente der Feinmechanik, 2. Auflage, Carl Hanser Verlag, München/Wien 1993 zu finden, wobei sich nicht alle der auf Seite 422 aufgeführten Typen zur Verwendung als Parallelführung eignen. Da Parallelführungsmembranen sehr dünne Bauteile sind, können die Durchbrüche mittels Funkenerosion, Stanzen, Wasserstrahlschneiden, Laserschnittverfahren, Fotoätzverfahren und dergleichen erzeugt werden.

Wichtig für die Präzision des Messergebnisses der Wägezelle ist auch die Formstabilität des feststehenden Parallelschenkels sowie dessen Abstützung beziehungsweise Festlegung an der Wägezelle. Idealerweise weist der feststehende Parallelschenkel deshalb dieselbe Aussenkontur wie das Wägezellengehäuse auf. Zudem ist eine geschlossene Rahmenstruktur des feststehenden Parallelschenkels, an dessen Rahmeninnenseite die Parallellenker angeordnet sind sehr von Vorteil. Des Weiteren kann ein sehr dünner feststehender Parallelschenkel durch Bördeln oder Abkanten der Aussenkontur sowie durch das Einprägen von Sicken markant biegesteifer gestaltet werden. Unter Bördeln wird das Einrollen von dünnen Blechkanten verstanden wie es beispielsweise in der Produktion von Blechdosen angewandt wird. Abkanten im Zusammenhang mit der vorliegenden Erfindung bedeutet ein winklig zur ausgedehnten Ebene eines Bleches abgebogener Randbereich, so dass das dadurch im Randbereich geschaffene Winkelprofil die Biegesteifigkeit des Bleches erhöht. Ein vergleichbarer Randbereich kann aber auch beispielsweise durch Fräsen erzeugt werden. Dasselbe gilt ebenso für die Erzeugung von Rippen anstelle von Sicken. Dadurch wird der feststehende Parallelschenkel breitestmöglich abgestützt, deformiert sich im Belastungszustand nicht und die im Material Verspannungen verursachenden Verbindungselemente können möglichst weit von den sich verbiegenden Parallellenkern beziehungsweise den Dünnstellenbiegelagern angeordnet werden. Sofern es notwendig erscheint, kann natürlich auch der bewegliche Parallelschenkel über die gesamte Länge oder partiell mittels Sicken oder Rippen eine erhöhte Biegesteifigkeit erlangen.

Mehrere Wägemodule können in einer Vorrichtung zum Wiegen gleichgearteter Wägegüter in einer vorgegebenen räumlichen oder flächigen Anordnung miteinander starr verbunden werden.

Die einzelnen Wägezellen sind direkt mit Befestigungsmitteln verschiedener Art miteinander verbindbar ausgestaltet. Aber auch mittels einer Aufnahmestruktur die die einzelnen Wägemodule aufnimmt, sind die Wägemodule indirekt miteinander starr verbindbar. Als Aufnahmestruktur sind beispielsweise Platten mit entsprechendem Lochbild, Zwischen- oder Distanzstücke, Rahmen und dergleichen verwendbar. Als Lochbild wird eine definierte, geometrische Anordnung von Bohrungen und Aussparungen zueinander in einem Körper, beispielsweise in einer Platte, bezeichnet.

Gattungsgemäss können als Befestigungsmittel zur starren Verbindung der Wägezellen untereinander formschlüssige lösbare oder nicht lösbare Verbindungselemente wie Schrauben, Stifte, Nieten, Bolzen und dergleichen verwendet werden, aber auch an den Wägezellen ausgebildete Vorsprünge, Taschen, Laschen Bohrungen und Vertiefungen. Selbst wegbegrenzte Linearführungen und dergleichen sind als Befestigungsmittel beziehungsweise Befestigungsbereiche geeignet. Des Weiteren können die Wägezellen, Parallelführungen und gegebenenfalls die Aufnahmestrukturen durch klemmen, verstemmen, schnappen, schmieden, kleben, löten, schweissen, vergiessen, pressen, aufschrumpfen und dergleichen im Sinne eines Befestigungsmittels miteinander verbunden sein.

In einer Ausführung sind mindestens zwei Wägemodule nebeneinander angeordnet. Die Wägezellengehäuse einer solchen Reihe können einstückig ausgebildet sein. Ebenso möglich ist es, alle Wägezellengehäuse in einer Linie zusammenzufassen oder in einer Platte zu vereinigen, so dass alle Wägezellengehäuse aus einer Platte heraus gearbeitet monolithisch miteinander verbunden sind.

In einer bevorzugten Ausführung durchdringen die mit den Lastaufnehmern verbundenen Kraftübertragungsgestänge die Wägezellen. Die oberen Parallellenker sind mit den Kraftübertragungsgestängen der zugeordneten Wägezellen zwischen dem Lastaufnehmer und der Wägezelle verbunden. Die unteren Parallellenker sind auf der dem Lastaufnehmer abgewandten Seite der Wägezellen angeordnet und mit den die Wägezellen durchdringenden, zugeordneten Kraftübertragungsgestängen verbunden.

In diesem Zusammenhang ist der Lastaufnehmer als eine das Wägegut für eine Wägung aufnehmende Vorrichtung jedweder Form zu betrachten, insbesondere ist hier auch eine Lastaufnahme-Plattform, auf welcher auch ein Aufbau befestigt werden kann, oder der Begriff Waagschale eingeschlossen. Ebenso kann auf dem Lastaufnehmer selbst noch ein zusätzlicher Aufbau oder Adapter angebracht sein.

Jedes Wägemodul weist seine eigene Parallelführung, ob monolithisch aus einem Materialblock herausgearbeitet oder aus Einzelteilen zusammengestellt, auf.

In einer besonders bevorzugten Ausführung sind die Parallelführungen in einer Platte zusammengefasst, seien es aus Einzelteilen zusammengestellte und mit der Platte verbundene, oder aus der Platte direkt herausgearbeitete Parallelführungen. Die Platte überspannt entweder alle Wägezellen und enthält somit alle Parallelführungen der ganzen Vorrichtung zum Wiegen gleichgearteter Wägegüter, oder die Parallelführungen sind auf mehrere Platten verteilt, die nebeneinander, aber nicht zwingend auf derselben Ebene, orthogonal zur Lastrichtung angeordnet sind. Selbstverständlich müssen die Wägezellen mit der den feststehenden Parallelschenkelverbund der Parallelführungen bildenden Platte starr verbunden sein, wobei die beweglichen Parallelschenkel der herausgearbeiteten oder mit der Platte verbundenen Parallelführungen mit den Kraftübertragungsgestängen der zugeordneten Wägezellen verbunden sind.

Eine Weiterbildung dieser Anordnung von Wägezellen und Platten besteht darin, dass alle oberen Parallellenker auf einem oberen feststehenden Parallelschenkelverbund und alle unteren Parallellenker auf einem unteren feststehenden Parallelschenkelverbund angeordnet sind. Die beweglichen Parallelschenkel des oberen feststehenden Parallelschenkelverbundes werden mit den Kraftübertragungsgestängen der zugeordneten Wägezellen zwischen Lastaufnehmer und Wägezelle verbunden. Die beweglichen Parallelschenkel des unteren feststehenden Parallelschenkelverbundes, die auf der den Lastaufnehmern abgewandten Seite der Wägezellen angeordnet ist, sind mit den die Wägezellen durchdringenden zugeordneten Kraftübertragungsgestängen verbunden.

Eine bevorzugte Weiterbildung besteht darin, dass die Wägemodule in mindestens zwei Ebenen übereinander angeordnet sind, in welchen die Wägemodule jeweils eine Reihen und/oder Flächenanordnung bilden. Um die Kraftübertragungsgestänge einer unteren Ebene in geeigneter Weise an den Wägemodulen der oberen Ebene vorbeizuführen, können die Wägemodule einer Ebene gegenüber denjenigen der darunter und/oder darüber liegenden Ebene versetzt angeordnet sein. Jedes Wägemodul weist eine von den anderen Wägemodulen vollständig unabhängige Parallelführung auf.

In einer besonders bevorzugten Weiterbildung sind die Wägemodule in mindestens zwei Ebenen übereinander angeordnet, wobei die Parallelführungen in feststehenden Parallelschenkelverbunden zusammengefasst sind.

Sofern pro Ebene die oberen und unteren Parallellenker der Wägemodule in einem oberen und in einem unteren feststehenden Parallelschenkelverbund zusammengefasst sind, besteht die Möglichkeit, zwischen zwei Ebenen angeordnete feststehende Parallelschenkelverbunde zusammenzufassen, so dass der zwischen den Ebenen liegende feststehenden Parallelschenkelverbund sowohl Parallelführungen zu den Wägezellen der oberen Ebene als auch Parallelführungen zu den Wägezellen der unteren Ebene aufweist. Die Anzahl der Ebenen, auf welchen die Wägemodule angeordnet sein können, hängt von den Abmessungen der Wägemodule und von der geforderten Anzahl der Lastträger ab, wobei letztere wiederum dadurch beeinflusst ist, wie die Wägegüter den Lastträgern zugeführt werden.

Wenn Wägemodule in einer Anordnung mit mehreren Ebenen mit unterschiedlich langen Kraftübertragungsgestängen versehen sind, zum Beispiel um die Lastaufnehmer in einer Ebene anzuordnen, weisen sie unterschiedliche Vorlasten auf. Diese unterschiedlichen Vorlasten können durch ein Ausgleichsgewicht, beispielsweise eine Schraube bei den Wägemodulen mit kürzerem Kraftübertragungsgestänge, angeglichen werden. Sofern es die Raumverhältnisse zulassen, kann dieses Ausgleichsgewicht beziehungsweise Vorlastkompensationsgewicht im Verbindungsbereich von Kraftübertragungsgestänge und beweglichem Parallelschenkel der Parallelführung angebracht werden.

Einzelheiten zum erfindungsgemässen Wägemodul und zur Vorrichtung zum Wiegen gleichgearteter Wägegüter ergeben sich anhand der Beschreibung der in den Zeichnungen dargestellten Ausführungsbeispiele. Es zeigt:
- Fig. 1: eine perspektivische Darstellung einer Aufnahmestruktur mit zwei Wägemodulen mit oberhalb der Wägezelle und unterhalb der Wägezelle angeordneten Parallelführungsmembranen und der Bauraum eines Wägemoduls;
- Fig. 2: verschiedene Ausführungen von rotationssymmetrischen Parallelführungsmembranen mit konzentrisch profilierten Parallellenkern, wobei die Figuren 2a bis 2c im Schnitt dargestellt sind und nur eine von zwei je Parallelführung notwendigen Parallelführungsmembranen dargestellt ist;
- Fig. 3: verschiedene Ausführungen von ebenen Parallelführungsmembranen mit Durchbrechungen, wobei die Figuren 3a bis 3c in Aufsicht dargestellt sind;
- Fig. 4: verschiedene Ausführungen von Parallelführungsmembranen mit Durchbrechungen und Versteifungen am feststehenden Parallelschenkel, wobei die Figuren 4a bis 4c in Aufsicht und Schnitt dargestellt sind;
- Fig. 5: eine perspektivische Darstellung eines Wägemoduls mit oberhalb und unterhalb der Wägezelle angeordneten, mit der Wägezelle monolithisch verbundenen mäanderförmig vertikal gefalteten Parallellenkern;
- Fig. 6: eine perspektivische Darstellung eines Wägemoduls mit oberhalb und unterhalb der Wägezelle angeordneten, mit der Wägezelle verbundenen mäanderförmig gefalteten, pyramidenförmig ausgestalteten Parallellenkern;
- Fig. 7: eine perspektivische Darstellung einer Vorrichtung mit sechs auf einer plattenförmigen Aufnahmestruktur festgelegten Wägemodule deren Parallelführungen oberhalb der Wägezellen in plattenförmigen feststehenden Parallelschenkelverbunden angeordnet sind und der angedeutete Bauraum eines Wägemoduls;
- Fig. 8: eine perspektivische Darstellung einer Vorrichtung mit sechs Wägemodulen deren Wägezellengehäuse monolithisch miteinander verbunden und deren Parallelführungen in plattenförmigen feststehenden Parallelschenkelverbunden angelenkt sind, wobei der obere feststehende Parallelschenkelverbund zwischen den Lastaufnehmern und den Wägezellen positioniert ist und der untere feststehende Parallelschenkelverbund auf der den Lastaufnehmern abgewandten Seite der Wägezellen angeordnet ist sowie der angedeutete Bauraum eines Wägemoduls;
- Fig. 9: eine perspektivische Darstellung einer Vorrichtung mit zwei zueinander versetzt angeordneten Ebenen welche je sechs Wägemodule aufweisen wobei die Parallelführungen jeweils oberhalb und unterhalb der Wägezellen angeordnet sind.

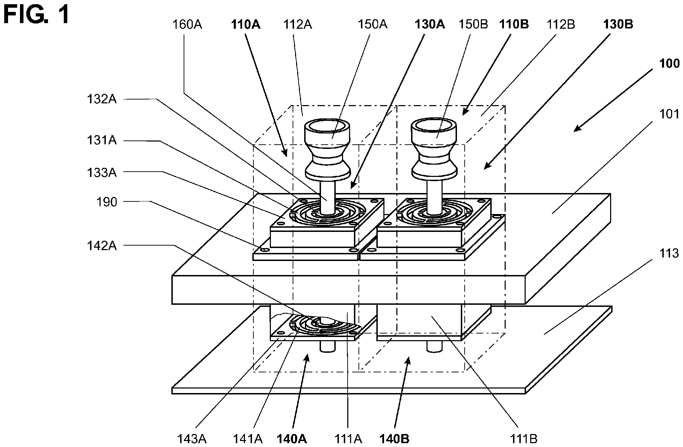

In Figur 1 ist die perspektivische Darstellung einer Aufnahmestruktur 101 mit zwei erfindungsgemässen Wägemodulen 110A, 110B dargestellt, welche eine Vorrichtung zum Wiegen gleichgearteter Wägegüter 100 bilden. Jedes Wägemodul 110A, 110B weist eine Wägezelle 111A, 111B und je einen zugeordneten Lastaufnehmer 150A, 150B auf. Jedes dieser Wägemodule 110A, 110B ist in einem Bauraum 112A, 112B angeordnet. Die Ausdehnung des jeweiligen Bauraumes in der Ebene orthogonal zur Lastrichtung wird durch die Bauräume benachbarter Wägezellen begrenzt oder entspricht der grössten Ausdehnung der zugeordneten Wägezelle 111A, 111B in dieser Ebene im entsprechenden Bauraum 112A, 112B. Die Ausdehnung in der Lastrichtung ist beispielsweise durch einen mit der Aufnahmestruktur fest verbundenen Gehäuseboden 113 begrenzt. Die Begrenzung der Bauräume 112A, 112B entgegen der Lastrichtung bilden beispielsweise die Oberkanten der Lastaufnehmer 150A, 150B, da sich beispielsweise oberhalb der Lastaufnehmer 150A, 150B üblicherweise der Operationsraum einer nicht dargestellten Beschickungsanlage befindet.

Das Wägemodul 110A ist durch Befestigungsmittel 190, beispielsweise Schrauben mit der Aufnahmestruktur 101 starr verbunden. Die Wägezelle 111A des Wägemoduls 110A weist eine nicht dargestellte, im Innern der Wägezelle 111A angeordnete Spule auf, die mit einem Kraftübertragungsgestänge 160A verbunden ist, welches die Wägezelle 111A in Lastrichtung durchdringt. Am oberen Ende des Kraftübertragungsgestänges 160A ist der Lastaufnehmer 150A angebracht.

Zwischen dem Lastaufnehmer 150A und der Wägezelle 111A ist eine obere Parallelführungsmembran 130A angeordnet, deren oberer Parallellenker 131A den oberen beweglichen Parallelschenkel 132A in vorgegebenem Führungsabstand mit dem oberen feststehenden Parallelschenkel 133A verbindet.

Mit Führungsabstand wird der direkte Abstand zwischen dem beweglichen Parallelschenkel 132A und dem feststehenden Parallelschenkel 133A der Parallelführungsmembran 130A bezeichnet. Dabei ist es unerheblich wie der Parallellenker 131A, welcher die beiden Schenkel verbindet, ausgestaltet ist.

Der Parallellenker 131A ist aber so ausgestaltet, dass dessen Wirklänge wesentlich grösser ist als die Führungslänge der Parallelführungsmembran 130A. Die Wirklänge wird als die tatsächliche gestreckte Länge beziehungsweise die Länge der biegespannungsneutralen Faser des Parallellenkers 131A inklusive den dazu gehörenden Verbindungsstellen mit den Parallelschenkeln 132A, 133A definiert.

Der obere bewegliche Parallelschenkel 132A ist mit dem Kraftübertragungsgestänge 160A verbunden und der obere feststehende Parallelschenkel 133A ist an der Wägezelle 111A festgelegt. Desgleichen ist auf der, dem Lastaufnehmer 150A abgewandten Seite der Wägezelle 111A eine untere Parallelführungsmembran 140A angeordnet, deren unterer Parallellenker 141A den unteren beweglichen Parallelschenkel 142A mit dem unteren feststehenden Parallelschenkel 143A verbindet, wie es die gebrochen dargestellte Wägezelle 111A in Figur 1 zeigt. Auch der untere bewegliche Parallelschenkel 142A ist mit dem Kraftübertragungsgestänge 160A verbunden und auch der untere feststehende Parallelschenkel 143A ist an der Wägezelle 111A festgelegt.

Die Wirklänge des oberen Parallellenkers 131A sollte gegenüber der Wirklänge des unteren Parallellenkers 141A identisch sein, da sonst eine präzise Parallelführung des Kraftübertragungsgestänges 160A kaum möglich ist.

Die Beschreibung des Wägemoduls 110A gilt sinngemäss auch für das Wägemodul 110B, dessen obere Parallelführungsmembran 130B und untere Parallelführungsmembran 140B.

Damit nebeneinander liegende Wägemodule 110A, 110B in einer Vorrichtung zum Wiegen gleichgearteter Wägegüter 100 problemlos ausgetauscht werden können, darf kein Teil des jeweiligen Wägemoduls 110A über die Grenzen seines Bauraumes 112A hinausragen. Deshalb muss der beweglichen Parallelschenkel 132A innerhalb des Bauraums 112A angeordnet sein. Im äussersten Falle kann die Aussenkontur des beweglichen Parallelschenkels 132A, des Parallellenkers 131A oder des feststehenden Parallelschenkels 133A der Aussenkontur der Bauraum-Querschnittfläche orthogonal zur Lastrichtung entsprechen.

Selbstverständlich ist diese Anordnung nicht auf zwei Wägemodule 110A, 110B beschränkt. Es können beliebig viele Wägemodule in einer flächigen Anordnung hinter- und nebeneinander angeordnet werden, wobei jeweils zwei benachbarte Wägezellen in der dargestellten Weise gruppiert sind.

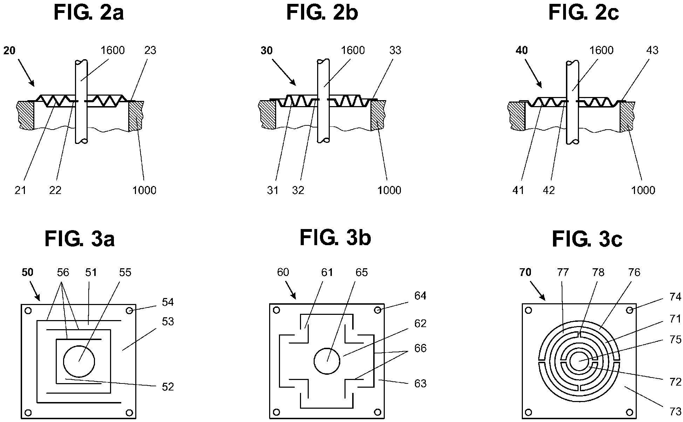

Figur 2 zeigt, nicht abschliessend, verschiedene Ausführungen von Parallelführungsmembranen. Die Figuren 2a bis 2c zeigen rotationssymmetrische Parallelführungsmembranen 20, 30, 40 im Schnitt, die in Ihrem Aufbau bis auf das Schnittprofil der Parallellenker 21, 31, 41 identisch sind. Eine rotationssymmetrische Parallelführungsmembran 20, 30, 40 ist zwischen dem nicht dargestellten Lastaufnehmer und der Wägezelle 1000 angeordnet wobei der feststehende Parallelschenkel 23, 33, 43 an der Wägezelle 1000 festgelegt ist. Der bewegliche Parallelschenkel 22, 32, 42 der rotationssymmetrischen Parallelführungsmembran 20, 30, 40 ist mit dem Kraftübertragungsgestänge 1600 starr verbunden. Zwischen dem feststehenden Parallelschenkel 23, 33, 43 und dem beweglichen Parallelschenkel 22, 32, 42 ist der in Lastrichtung rotationssymmetrisch ausgebildete Parallellenker 21, 31, 41 angeordnet, der diese beiden Parallelschenkel miteinander verbindet. Dieser Parallellenker 21, 31, 41 ist konzentrisch profiliert, wobei ein sägezahnförmiges Querschnittprofil des Parallellenkers 21, ein trapezförmiges Querschnittprofil des Parallellenkers 31 oder ein sinusförmiges Querschnittprofil des Parallellenkers 41 ausgestaltet sein kann. Um das Kraftübertragungsgestänge 1600 parallel zu führen, bedarf es einer in den Figuren 2a bis 2c nicht dargestellten, mit der rotationssymmetrischen Parallelführungsmembran 20, 30, 40 identischen zweiten Parallelführungsmembran 20, 30, 40, welche zur ersten Parallelführungsmembran 20, 30, 40 parallel beabstandet angeordnet ist.

Die Figur 3a zeigt in Aufsicht eine Parallelführungsmembran 50, deren Aussenkontur des feststehenden Parallelschenkels 53 dem Querschnitt des Bauraumes orthogonal zur Lastrichtung eines Wägemoduls entspricht. Mittels U-förmiger Durchbrechungen 56 orthogonal zur ausgedehnten Ebene der Parallelführungsmembran 50 sind mäanderförmig angeordnete, federnde Parallellenker 51 ausgebildet. Diese verbinden den in der Mitte der Parallelführungsmembran angeordneten beweglichen Parallelschenkel 52 mit dem feststehenden Parallelschenkel 53, wobei der feststehende Parallelschenkel 53 in Form eines geschlossenen Rahmens die Parallellenker 51 und den feststehenden Parallelschenkel 52 in der ausgedehnten Ebene der Parallelführungsmembran 50 umschliesst. Im Randbereich des feststehenden Parallelschenkels 53 sind Bohrungen 54 angeordnet, die zur Festlegung der Parallelführungsmembrane 50 an ein Wägezellengehäuse dienen. Der bewegliche Parallelschenkel 52 weist eine Gestängebohrung 55 auf, die der Verbindung mit dem Kraftübertragungsgestänge der entsprechenden Wägezelle dient.

Die Figur 3b zeigt in Aufsicht eine Parallelführungsmembran 60, deren Aussenkontur des feststehenden Parallelschenkels 63 dem Querschnitt des Bauraumes orthogonal zur Lastrichtung eines Wägemoduls entspricht. Mittels U-förmiger und winkelförmiger Durchbrechungen 66 orthogonal zur ausgedehnten Ebene der Parallelführungsmembran 60 wird eine serielle und parallele Zusammenschaltung mehrerer Blattfedern zu mehreren federnden Parallellenkern 61 gebildet. Diese verbinden den in der Mitte der Parallelführungsmembran 60 angeordneten beweglichen Parallelschenkel 62 mit dem feststehenden Parallelschenkel 63, wobei der feststehende Parallelschenkel 63 in Form eines geschlossenen Rahmens die Parallellenker 61 und den feststehenden Parallelschenkel 62 in der ausgedehnten Ebene der Parallelführungsmembran 60 umschliesst. Im Randbereich des feststehenden Parallelschenkels 63 sind Bohrungen 64 angeordnet, die zur Festlegung der Parallelführungsmembrane 60 an ein Wägezellengehäuse dienen. Der bewegliche Parallelschenkel 62 weist eine Gestängebohrung 65 auf, die der Verbindung mit dem Kraftübertragungsgestänge der entsprechenden Wägezelle dient.

Die Durchbrechungen 66 müssen nicht zwingend rechtwinklige Richtungsänderungen aufweisen, ebenso sind Winkel über 90° beziehungsweise unter 90° möglich, die einer sternförmigen Anordnung der Parallellenker 61 entsprechen. Ebenso sind an Stelle U- förmiger Durchbrechungen 66 auch M- förmige Durchbrechungen 66 möglich.

Die Figur 3c zeigt in Aufsicht eine Parallelführungsmembran 70, deren Aussenkontur des feststehenden Parallelschenkels 73 dem Querschnitt des Bauraumes orthogonal zur Lastrichtung eines Wägemoduls entspricht. Mittels zum Zentrum der Parallelführungsmembran 70 hin koaxial angeordneter, bogenförmiger Durchbrechungen 76 orthogonal zur ausgedehnten Ebene der Parallelführungsmembran 70, werden Ringfedersegmente 77 gebildet, die mittels Stegen 78 miteinander verbunden sind. Jedes Ringfedersegment 77 ist durch zwei Stege mit dem nächsten Ringfedersegment verbunden, wobei die je zwei Stege 78 zwischen zwei Ringfedersegmenten 77 um 180° zueinander und parallel zu jeweils zwei Seiten der Aussenkontur angeordnet sind. Ferner sind die Stege benachbarter Ringfedersegmente 77 jeweils um 90° zueinander versetzt angeordnet um eine möglichst grosse Wirklänge des Parallellenkers 71 zu erreichen. Dieser verbindet den in der Mitte der Parallelführungsmembran 70 angeordneten beweglichen Parallelschenkel 72 mit dem feststehenden Parallelschenkel 73, wobei der feststehende Parallelschenkel 73 in Form eines geschlossenen Rahmens den Parallellenker 71 und den beweglichen Parallelschenkel 72 in der ausgedehnten Ebene der Parallelführungsmembran 70 umschliesst. Im Randbereich des feststehenden Parallelschenkels 73 sind Bohrungen 74 angeordnet, die zur Festlegung der Parallelführungsmembrane 70 an ein Wägezellengehäuse dienen. Der bewegliche Parallelschenkel 72 weist eine Gestängebohrung 75 auf, die der Verbindung mit dem Kraftübertragungsgestänge der entsprechenden Wägezelle dient.

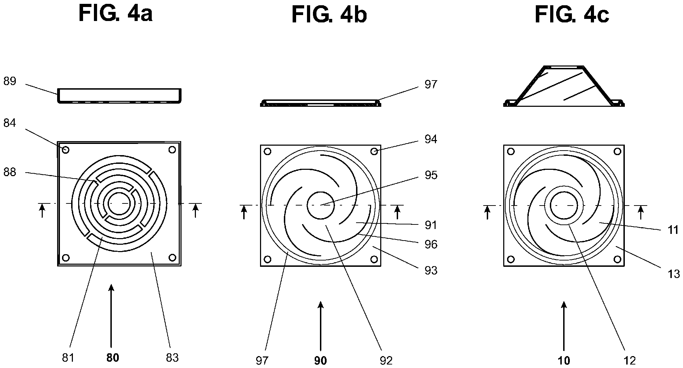

Die Figur 4a zeigt in Aufsicht und im Schnitt eine Parallelführungsmembran 80, welche in ihrer Ausführung weitestgehend der in Figur 3c ausführlich beschriebenen Parallelführungsmembran entspricht. Im Unterschied zur Ausführung in Figur 3c sind die Randbereiche 89 des feststehenden Parallelschenkels 83 umlaufend winklig abgebogen um den feststehenden Parallelschenkel 83 zu versteifen. Ferner sind die Stege 88 des Parallellenkers 81 nach den im feststehenden Parallelschenkel 83 angeordneten Bohrungen 84, also diagonal zur quadratischen Aussenkontur des feststehenden Parallelschenkels 83, ausgerichtet. Die Bohrungen 84 dienen der Festlegung des feststehenden Parallelschenkels 83 durch Befestigungsmittel an einer Wägezelle.

Die Figur 4b zeigt in Aufsicht und im Schnitt eine Parallelführungsmembran 90, deren Aussenkontur des feststehenden Parallelschenkels 93 dem Querschnitt des Bauraumes orthogonal zur Lastrichtung eines Wägemoduls entspricht. Mittels spiralförmiger Durchbrechungen 96 orthogonal zur ausgedehnten Ebene der Parallelführungsmembran 90 sind spiralförmig, federnde Parallellenker 91 ausgebildet. Diese verbinden den in der Mitte der Parallelführungsmembran angeordneten beweglichen Parallelschenkel 92 mit dem feststehenden Parallelschenkel 93, wobei der feststehende Parallelschenkel 93 in Form eines geschlossenen Rahmens die Parallellenker 91 und den feststehenden Parallelschenkel 92 in der ausgedehnten Ebene der Parallelführungsmembran 90 umschliesst. Im Randbereich des feststehenden Parallelschenkels 93 sind Bohrungen 94 angeordnet, die zur Festlegung der Parallelführungsmembran 90 an ein Wägezellengehäuse dienen. Der bewegliche Parallelschenkel 92 weist eine Gestängebohrung 95 auf, die der Verbindung mit dem Kraftübertragungsgestänge der entsprechenden Wägezelle dient. In den feststehenden Parallelschenkel 93 ist eine umlaufende Sicke 97 zur Versteifung desselben eingeprägt. Der innere Rand der Sicke 97 ist in unmittelbarer Nähe zu den von der Gestängebohrung 95 abgewandten Enden der spiralförmigen Durchbrechungen 96 angeordnet. Selbstverständlich muss die Sicke 97 nicht konzentrisch zur Gestängebohrung 95 angeordnet sein. Die Sicke 97 kann auch in der ausgedehnten Ebene der Parallelführungsmembran 90 polygonförmig ausgebildet oder unterbrochen sein. Anstelle einer eingeprägten Sicke 97 kann die Versteifung des feststehenden Parallelschenkels 93 auch durch eine Rippe erfolgen die durch Fräsen erzeugt monolithisch oder als Zusatzteil form- stoff- oder kraftschlüssig mit dem feststehenden Parallelschenkel 93 verbunden ist.

Figur 4c zeigt eine, mit der in Figur 4b dargestellten Parallelführungsmembran nahezu identische Parallelführungsmembran 10, wobei der bewegliche Parallelschenkel 12 in einer zur ausgedehnten Ebene des feststehenden Parallelschenkels 13 beabstandeten, parallelen Ebene angeordnet ist. Die spiralförmigen Parallellenker 11 streben dadurch vom feststehenden Parallelschenkel 13, kegelförmig zum beweglichen Parallelschenkel 12 hin. Wie in Figur 2a beschrieben, sind bei allen Parallelführungen die Parallelführungsmembranen aufweisen, jeweils zwei Parallelführungsmembranen notwendig. Bei Verwendung der in Figur 4c dargestellten Parallelführungsmembran 10 kann die kegelstumpfförmige Struktur der ersten und der zweiten Parallelführungsmembran 10 in dieselbe Richtung weisen, folglich auch in Bezug zu ihrer Form parallel angeordnet sein. Jedoch kann die kegelstumpfförmige Struktur der zweiten Parallelführungsmembran 10 auch in entgegen gesetzter Richtung zur kegelstumpfförmigen Struktur der ersten Parallelführungsmembran 10 weisen. Ferner ist natürlich auch eine Anordnung möglich, bei der die kegelstumpfförmigen Strukturen der beiden Parallelführungsmembranen 10 gegeneinander weisend angeordnet sind, so dass die beweglichen Parallelschenkel 12 näher zueinander angeordnet sind als die feststehenden Parallelschenkel 13.

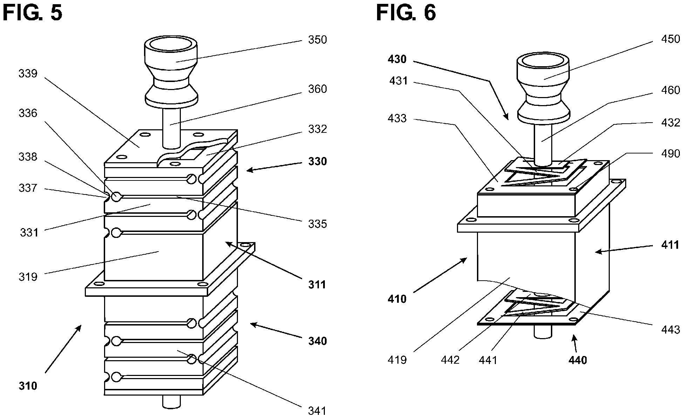

In Figur 5 ist ein Wägemodul 310 in Perspektive dargestellt, dessen Wägezelle 311 im Aufbau im Wesentlichen der in Figur 1 beschriebenen Wägezelle entspricht. Im Unterschied zu den in Figur 1 beschriebenen Wägemodulen weist das Wägemodul 310 einen zwischen dem Lastaufnehmer 350 und der Wägezelle 311 angeordneten oberen Parallelführungsteil 330 und einen auf der dem Lastaufnehmer 350 abgewandten Seite der Wägezelle angeordneten unteren Parallelführungsteil 340 auf, die mit dem Wägezellengehäuse 319 der Wägezelle 311 monolithisch verbundenen sind. Der obere Parallellenker 331 ist in einer die Lastrichtung enthaltenden Ebene gefaltetet. Durch in Ebenen orthogonal zur Lastrichtung das Wägezellengehäuse 319 durchsetzende, an drei Seiten des Wägezellengehäuses offene Schnitte 335 ist der obere Parallellenker 331 gebildet. Die Schnittabfolge ist so festgelegt, dass in Lastrichtung benachbarte Schnitte 335 jeweils von der gegenüberliegenden Seite ausgehend angeordnet sind. Schnitterweiterungen 336 am Grund der Schnitte 335 und Ausnehmungen 337 auf derselben Ebene wie die Schnitte 335, an der, durch den jeweiligen Schnitt nicht durchsetzten Wägezellengehäuseseite, bilden jeweils ein Dünnstellenbiegelager 338. Diese verbinden die durch die Schnitte gebildeten Segmente des Parallellenkers 331 untereinander, mit dem beweglichen Parallelschenkel 332 und mit dem Wägezellengehäuse 319. Eine Abschlussplatte 339 stellt die Verbindung zwischen dem beweglichen Parallelschenkel 332 und dem Kraftübertragungsgestänge 360 her. Der untere Parallelführungsteil 340 mit seinem Parallellenker 341 ist analog zum oberen Parallelführungsteil 330 ausgestaltet.

Selbstverständlich kann der Parallellenker 331 auch elastisch ausgestaltet sein, so dass keine Dünnstellenbiegelager 338 notwendig sind.

Figur 6 zeigt eine perspektivische Darstellung eines Wägemoduls 410 mit einer zwischen dem Lastaufnehmer 450 und der Wägezelle 411 angeordneten oberen Parallelführungsmembran 430, deren oberer feststehender Parallelschenkel 433 mit Befestigungsmitteln 490 am Wägezellengehäuse 419 der Wägezelle 411 festgelegt ist. Auf der, dem Lastaufnehmer 450 abgewandten Seite der Wägezelle 411 ist ebenfalls am Wägezellengehäuse 419 der untere feststehende Parallelschenkel 443 der unteren Parallelführungsmembran 440 festgelegt. Die obere Parallelführungsmembran 430 entspricht der in Figur 3a dargestellten Membran, jedoch ist der obere bewegliche Parallelschenkel 432 entgegen der Lastrichtung gegenüber dem feststehenden Parallelschenkel 433 versetzt angeordnet mit dem Kraftübertragungsgestänge 460 verbunden. Der versetzt angeordnete, obere bewegliche Parallelschenkel 432 bildet mit dem oberen feststehenden Parallelschenkel 433 und den oberen Parallellenker 431 eine pyramidenartig mäanderförmig ausgebildete Parallelführungsmembran 430. Dasselbe gilt auch für die durch die gebrochene Darstellung des Wägezellengehäuses 419 sichtbare untere Parallelführungsmembran 440, deren unterer Parallellenker 441 durch den unteren beweglichen Parallelschenkel 442 mit dem die Wägezelle 411 durchdringenden Kraftübertragungsgestänge 460 verbunden ist. Der untere bewegliche Parallelschenkel 442 muss aber nicht zwingend in gleicher Richtung -hier gegen die Lastrichtung- wie der obere bewegliche Parallelschenkel 432 versetzt angeordnet sein, sondern kann auch in Lastrichtung gegenüber dem unteren feststehenden Parallelschenkel 443 versetzt angeordnet sein.

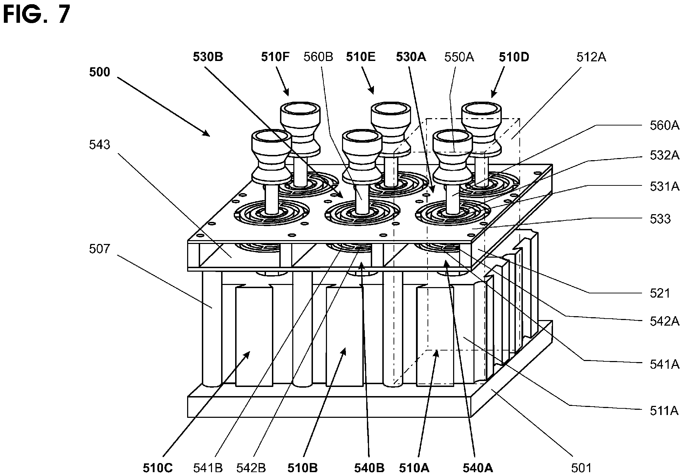

Figur 7 zeigt die perspektivische Darstellung einer Vorrichtung zum Wiegen gleichgearteter Wägegüter 500 mit einer flächigen Anordnung von Wägemodulen 510A, 510B, 510C, 510D, 510E, 510F.

Das Wägemodul 510A ist durch nicht dargestellte Befestigungsmittel, beispielsweise Schrauben mit einer Aufnahmestruktur 501 starr verbunden und weist eine Wägezelle 511A auf, deren nicht dargestellte, im Innern angeordnete Spule mit einem Kraftübertragungsgestänge 560A verbunden ist. Am oberen Ende des Kraftübertragungsgestänges 560A ist der Lastaufnehmer 550A angebracht. Mit dem Kraftübertragungsgestänge 560A ist der obere bewegliche Parallelschenkel 532A verbunden. Der obere Parallellenker 531A bildet mit dem oberen beweglichen Parallelschenkel 532A und mit dem oberen feststehenden Parallelschenkel die obere Parallelführungsmembran 530A. Der obere Parallellenker 531A und der obere bewegliche Parallelschenkel 532 sind analog der in Figur 1 beschriebenen oberen Parallelführungsmembran 130A ausgestaltet.

Die analog dem Wägemodul 510A ausgebildeten und beschriebenen oberen Parallelführungsmembranen 530A, 530B,... aller Wägemodule 510A, 510B, 510C, 510D, 510E, 510F sind aus einer einstückigen Platte herausgearbeitet, wobei die materialfreien Bereiche durch Fräsen, Bohren, Stanzen, Laserschnitt- oder Wasserstrahlschneidverfahren, mittels Funkenerosion, Fotoätztechnik und dergleichen erzeugt werden können. Dadurch weisen alle oberen Parallelführungsmembranen 530A, 530B,... einen gemeinsamen oberen feststehenden Parallelschenkelverbund 533 auf.

Eine vollkommen identisch gefertigte zweite Platte mit den unteren Parallelführungsmembranen 540A, 540B,... stellt den unteren feststehenden Parallelschenkelverbund 543 dar, wobei die unteren beweglichen Parallelschenkel 542A, 542B,... durch die unteren Parallellenker 541A, 541B,... mit dem feststehenden Parallelschenkelverbund 543 verbundenen sind. Die Position der aus der Platte herausgearbeiteten unteren beweglichen Parallelschenkel 542A, 542B,... muss mit den zugeordneten oberen beweglichen Parallelschenkel 532A, 532B,... in Verbindung mit den Kraftübertragungsgestängen 560A, 560B,... genau übereinstimmen damit eine parallele Führung der Kraftübertragungsgestänge 560A, 560B,... möglich wird. Der obere feststehende Parallelschenkelverbund 533 und der untere feststehende Parallelschenkelverbund 543 sind durch Abstandstücke 521 miteinander starr verbunden. Die beiden miteinander verbundenen feststehenden Parallelschenkelverbunde 533, 543 sind über die Stützen 507 an der Aufnahmestruktur 501 starr fixiert.

Beim Wägemodul 510A sind der obere bewegliche Parallelschenkel 532A und der untere bewegliche Parallelschenkel 542A mit dem Kraftübertragungsgestänge 560A des Wägemoduls 510A verbunden, wobei die beweglichen Parallelschenkel 532A und 542A in gleichem Abstand wie der obere feststehende Parallelschenkelverbund 533 zum unteren feststehenden Parallelschenkelverbund 543 angeordnet sind.

Die Darstellung des Bauraums 512A des Wägemoduls 510A verdeutlicht die Abgrenzung des Wägemoduls 510A gegenüber den angrenzenden Wägemodulen sowie die Abgrenzung der oberen Parallelführungsmembran 530A und der unteren Parallelführungsmembran 540A in den Parallelschenkelverbunden 533, 543 gegenüber den angrenzenden Parallelführungsmembranen.

Wie für das Wägemodul 510A dargestellt, sind alle Kraftübertragungsgestänge der Wägemodule 510A, 510B, 510C, 510D, 510E, 510F mit den ihnen zugeordneten beweglichen Parallelschenkeln entsprechend verbunden.

Selbstverständlich ist diese Anordnung nicht auf sechs Wägemodule 510A, 510B, 510C, 510D, 510E, 510F beschränkt. Es können beliebig viele Wägemodule in einer flächigen Anordnung hinter- und nebeneinander angeordnet werden, wobei der obere feststehende Parallelschenkelverbund 533 und der untere feststehende Parallelschenkelverbund 543 der Anzahl Wägezellen angepasst werden muss.

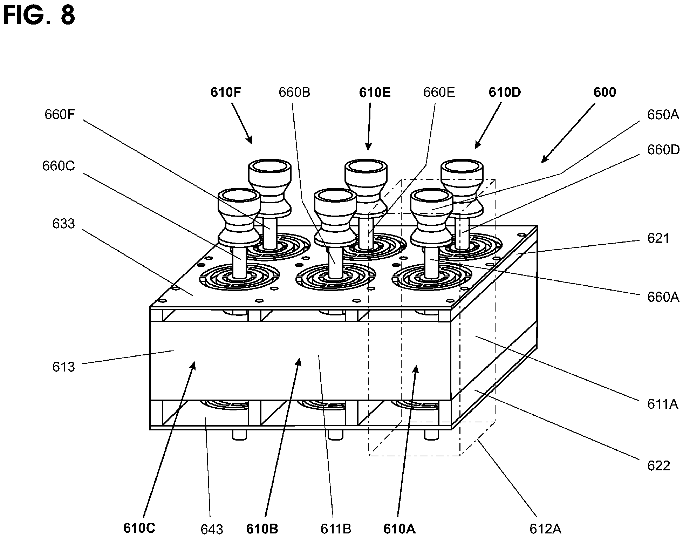

Figur 8 zeigt die perspektivische Darstellung einer Vorrichtung zum Wiegen gleichgearteter Wägegüter 600 mit einer flächigen Anordnung erfindungsgemässer Wägemodule 610A, 610B, 610C, 610D, 610E, 610F, deren Wägezellengehäuse in einem Wägezellengehäuseverbund 613 monolithisch starr miteinander verbunden sind. Diese Vorrichtung zum Wiegen gleichgearteter Wägegüter 600 weist einen oberen feststehenden Parallelschenkelverbund 633 und einen unteren feststehenden Parallelschenkelverbund 643 auf die in ihrem Aufbau weitgehend den Parallelschenkelverbunden in Figur 7 entsprechen. Jedes Wägemodul 610A, 610B,... weist ebenfalls eine Wägezelle 611A, 611B,... mit zugeordnetem Lastaufnehmer 650A, 650B,... auf. Die Darstellung des Bauraums 612A des Wägemoduls 610A verdeutlicht die Abgrenzung des Wägemoduls 610A gegenüber den angrenzenden Wägemodulen und die Abgrenzung der monolithisch miteinander verbundenen, feststehenden Parallelschenkel.
Anders als in Figur 7 ist der obere Parallelschenkelverbund direkt über Abstandstücke 621 mit dem Wägezellengehäuseverbund 613 starr verbunden. Zudem ist der untere feststehende Parallelschenkelverbund 643 auf der den Lastaufnehmern 650A, 650B abgewandten Seite der Wägezellen 611A, 611B,... starr über Distanzstücke 622 am Wägezellengehäuseverbund 613 festgelegt. Die Kraftübertragungsgestänge 660A, 660B,... durchdringen die ihnen zugeordneten Wägezellen 611A, 611B,... in Lastrichtung. Die den Wägemodulen 610A, 610B, 610C, 610D, 610E, 610F zugeordneten oberen beweglichen Parallelschenkel und unteren beweglichen Parallelschenkel sind mit den jeweiligen Kraftübertragungsgestängen 660A, 660B, 660C, 660D, 660E, 660F verbunden.

Selbstverständlich ist diese Anordnung nicht auf sechs Wägemodule 610A, 610B, 610C, 610D, 610E, 610F beschränkt. Es können beliebig viele Wägemodule in einer flächigen Anordnung hinter- und nebeneinander angeordnet werden, wobei der obere Feststehender Parallelschenkelverbund 633 und der untere Feststehender Parallelschenkelverbund 643 der Anzahl Wägezellen angepasst werden muss.

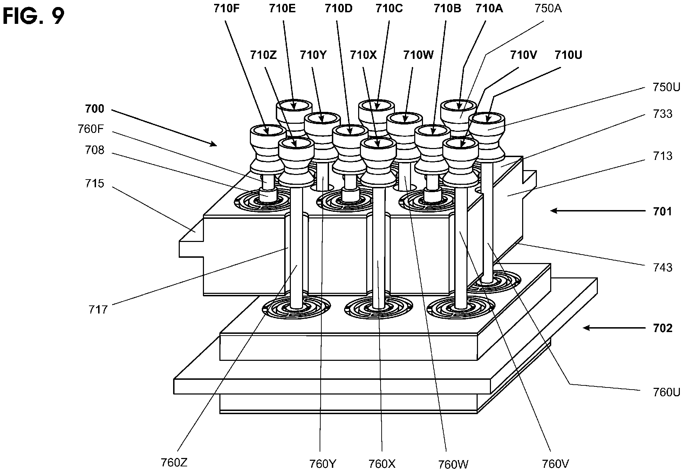

Figur 9 zeigt die perspektivische Darstellung einer Vorrichtung zum Wiegen gleichgearteter Wägegüter 700 mit je auf einer ersten Ebene 701 und auf einer zweiten Ebene 702 angeordneten, flächigen Anordnung von Wägemodulen wie sie vorangehend in Figur 8 beschrieben worden ist. Jedoch ist der obere Parallelschenkelverbund 733 und der untere Parallelschenkelverbund 743 nicht über Distanzstücke und Abstandstücke am Wägezellengehäuseverbund 713 festgelegt sondern direkt mit diesem starr verbunden. Die Wägemodule 710A, 710B, 710C, 710D, 710E, 710F der oberen Ebene 701 sind durch den Wägezellengehäuseverbund 713 miteinander starr verbunden. Am Wägezellengehäuseverbund 713 ist ein umlaufender Bund 715 ausgebildet der der Verbindung der Wägemodule der Ebene 701 mit den Wägemodulen der Ebene 702 über eine nicht dargestellte Aufnahmestruktur dient. Die Wägemodule 710U, 710V, 710W, 710X, 710Y, 710Z der unteren Ebene 702 sind analog der oberen Ebene 702 miteinander starr verbunden.

Die Ebene 701 ist gegenüber der Ebene 702 versetzt angeordnet, so dass die Kraftübertragungsgestänge 760U, 760V, 760W, 760X, 760Y, 760Z der Wägemodule 710U, 710V, 710W, 710X, 710Y, 710Z der unteren Ebene 702 an den Wägemodulen 710A, 710B, 710C, 710D, 710E, 710F der oberen Ebene 701 vorbeigeführt werden können. Damit sind die Lastaufnehmer 750U,... der unteren Ebene 702 in derselben Ebene orthogonal zur Lastrichtung angeordnet, wie die Lastaufnehmer 750A,... der oberen Ebene 701. Dazu muss der Wägezellengehäuseverbund 711 der oberen Ebene 701 Kanäle 717 aufweisen, durch die die Kraftübertragungsgestänge 760U, 760V, 760W, 760X, 760Y, 760Z der unteren Ebene 702 durchgeführt werden können.

Vorzugsweise weist jede Wägezelle ungeachtet ihrer Anordnung in der oberen Ebene 701 oder in der unteren Ebene 702 dieselben Verhältnisse im Bezug auf die Belastung durch Lastaufnehmer und Kraftübertragungsgestänge, die so genannte Vorlast auf. Da insbesondere die Kraftübertragungsgestänge 760U, 760V, 760W, 760X, 760Y, 760Z wesentlich länger als die Kraftübertragungsgestänge 760F,... ausgestaltet sind und dadurch mehr Masse aufweisen, wird die Vorlastdifferenz zwischen den Wägemodulen der oberen Ebene 701 und der unteren Ebene 702 mit einem Vorlastkompensationsgewicht 708 ausgeglichen, wobei je ein Vorlastkompensationsgewicht 708 am Kraftübertragungsgestänge jedes Wägemoduls 710A, 710B, 710C, 710D, 710E, 710F der oberen Ebene 701 befestigt ist.

Selbstverständlich ist diese Anordnung nicht auf sechs Wägemodule 710A, 710B, 710C, 710D, 710E, 710F beziehungsweise 710U, 710V, 710W, 710X, 710Y, 710Z pro Ebene beschränkt. Es können pro Ebene 701, 702 beliebig viele Wägemodule in einer flächigen Anordnung in der dargestellten Weise hinter- und nebeneinander angeordnet werden.

### Bezugszeichenliste

- 20,30,40: rotationssymmetrische Parallelführungsmembran
- 11,21,31,41,51,61,71,81,91: Parallellenker
- 12,22,32,42,52,62,72,92: beweglicher Parallelschenkel
- 13,23,33,43,53,63,73,83,93: feststehender Parallelschenkel
- 10,50,60,70,80,90: Parallelführungsmembran
- 54,64,74,84,94: Bohrung
- 55,65,75,95: Gestängebohrung
- 56,66,76,96: Durchbrechung
- 77: Ringfedersegment
- 78,88: Steg
- 89: Randbereich
- 97: Sicke
- 100,500,600,700: Vorrichtung zum Wiegen gleichgearteter Wägegüter
- 101,501: Aufnahmestruktur
- 110A-B,310,410,510A-F,: Wägemodul
- 610A-F,710A-F,710U-Z 111A-B,311,411,511A,: Wägezelle
- 611A-B,1000 112A-B,512A,612A: Bauraum
- 113: Gehäuseboden
- 130A-B,430,530A-B: obere Parallelführungsmembran
- 131A,331,431,531A: oberer Parallellenker
- 132A,332,432,532A: oberer bew. Parallelschenkel
- 133A,433: oberer feststehender Parallelschenkel
- 140A-B,440,540A-B: untere Parallelführungsmembran
- 141A,,341,441: unterer Parallellenker
- 142A,442: unterer bew. Parallelschenkel
- 143A,443: unterer feststehender Parallelschenkel
- 150A-B,350,450,550A,: Lastaufnehmer
- 650A,750A,750U 160A,360,460,560A-B,: Kraftübertragungsgestänge
- 660A-F,760F,760U-Z,1600 190,490: Befestigungsmittel
- 319,419: Wägezellengehäuse
- 330: oberer Parallelführungsteil
- 335: Schnitt
- 336: Schnitterweiterung
- 337: Ausnehmung
- 338: Dünnstellenbiegelager
- 339: Abschlussplatte
- 340: unterer Parallelführungsteil
- 507: Stütze
- 521,621: Abstandstück
- 533,633,733: oberer feststehender Parallelschenkelverbund
- 541A-B: unterer Parallellenker
- 542A-B: unterer bew. Parallelschenkel
- 543,643,743: unterer feststehender Parallelschenkelverbund
- 613,713: Wägezellengehäuseverbund
- 622: Distanzstück
- 701: erste Ebene
- 702: zweite Ebene
- 708: Vorlastkompensationsgewicht
- 715: umlaufender Bund
- 717: Kanal

## Patentansprüche

1. Wägemodul (110A) mit einem Lastaufnehmer (150A) und mit einer mit diesem Lastaufnehmer (150A) durch ein Kraftübertragungsgestänge (160A) verbundenen Wägezelle (111A), wobei das Wägemodul (110A)in einem Bauraum (112A) angeordnet ist dessen Ausdehnung in der Ebene orthogonal zur Lastrichtung durch die Bauräume (112B) benachbarter Wägezellen (111B) begrenzt ist oder der grössten Ausdehnung der Wägezelle (111A) in dieser Ebene entspricht und die Wägezelle (111A) eine Parallelführung (130A, 140A) beinhaltet, welche mindestens einen mit dem Kraftübertragungsgestänge (160A) verbundenen beweglichen Parallelschenkel (132A, 142A) und mindestens einen feststehenden Parallelschenkel (133A, 143A) aufweist und diese Parallelschenkel (132A, 142A, 133A, 143A) in einem vordefinierten Führungsabstand zueinander angeordnet und durch mindestens einen oberen Parallellenker (131A) und mindestens einen unteren Parallellenker (141A) miteinander verbunden sind, **dadurch gekennzeichnet, dass** als Mittel zur Reduktion der erforderlichen minimalen Auslenkkraft des beweglichen Parallelschenkels (132A, 142A) bei orthogonal zur Lastrichtung möglichst geringen Dimensionen des Wägemoduls (111A, 111B)
• die tatsächliche gestreckte Länge beziehungsweise die Länge der biegespannungsneutralen Faser der Parallellenker (131A, 141A) inklusive den dazu gehörenden Verbindungsstellen mit den Parallelschenkeln und sofern vorhanden, der zum Parallellenker (131A, 141A) gehörenden Dünnstellenbiegelager (338) grösser ist als der Führungsabstand und
• der bewegliche Parallelschenkel (132A, 142A) nicht über den Bauraum (112A) hinausragt.

2. Wägemodul nach Anspruch 1, **dadurch gekennzeichnet, dass** der mindestens eine obere Parallellenker (331) und der mindestens eine untere Parallellenker (341) in einer die Lastrichtung enthaltenden Ebene mäanderförmig ausgebildet sind.

3. Wägemodul nach Anspruch 1, **dadurch gekennzeichnet, dass** der mindestens eine obere Parallellenker (131A) mit einem oberen beweglichen Parallelschenkel (132A) und einem oberen feststehenden Parallelschenkel (133A) zu einer oberen Parallelführungsmembran (130A), und dass der mindestens eine untere Parallellenker (141A) mit einem unteren beweglichen Parallelschenkel (142A) und einem unteren feststehenden Parallelschenkel (143A) zu einer unteren Parallelführungsmembran (140A) ausgebildet sind.

4. Wägemodul nach Anspruch 3, **dadurch gekennzeichnet, dass** der mindestens eine obere Parallellenker (51) und der mindestens eine untere Parallellenker (51) in der Ebene orthogonal zur Lastrichtung mittels in Lastrichtung weisenden Durchbrechungen (56) mäanderförmig ausgebildet sind.

5. Wägemodul nach Anspruch 3, **dadurch gekennzeichnet, dass** der mindestens eine obere Parallellenker (431) und der mindestens eine untere Parallellenker (441) pyramidenartig mäanderförmig ausgebildet sind.

6. Wägemodul nach Anspruch 3, **dadurch gekennzeichnet, dass** der mindestens eine obere Parallellenker (91) und der mindestens eine untere Parallellenker (91) in der Ebene orthogonal zur Lastrichtung angeordnet, vom feststehenden Parallelschenkel (93) zum beweglichen Parallelschenkel (92) hin durch in Lastrichtung weisende, spiralförmige Durchbrechungen (96) gebildet sind.

7. Wägemodul nach Anspruch 3, **dadurch gekennzeichnet, dass** der mindestens eine obere Parallellenker (11) und der mindestens eine untere Parallellenker (11) vom feststehenden Parallelschenkel (13) zum beweglichen Parallelschenkel (12) hin kegelförmig spiralförmig ausgestaltet sind und der bewegliche Parallelschenkel (12) in einer von der Ebene des feststehenden Parallelschenkels (13) beabstandeten, parallelen Ebene angeordnet ist.

8. Wägemodul nach Anspruch 3, **dadurch gekennzeichnet, dass** diese Parallelführungsmembranen (20, 30, 40) konzentrisch profiliert sind und dass das Querschnittprofil der Parallellenker sägezahnförmig (21), trapezförmig (31) oder sinusförmig (41) ausgestaltet ist.

9. Wägemodul nach Anspruch 3, **dadurch gekennzeichnet, dass** der mindestens eine obere Parallellenker (71) und der mindestens eine untere Parallellenker (71) in Form von Federsegmenten (77) durch dünne, konzentrisch angeordnete Schnittlinien (76) gebildet sind, wobei die mindestens zwei Schnittlinien (76) pro Federsegment (77) zur Bildung von gegeneinander versetzt angeordneten Stegen (78) je mindestens einmal unterbrochenen sind um jeweils zwei benachbarte Federsegmente (77) miteinander zu verbinden.

10. Wägemodul nach einem der Ansprüche 1 bis 9, **dadurch gekennzeichnet, dass** der mindestens eine feststehende Parallelschenkel (23, 53, 73,...) eine geschlossene Rahmenstruktur aufweist und/oder mit mindestens einer Sicke (97), einer Versteifungsrippe, einer Bördelung oder einer Abkantung des Randbereichs (89) versehen ist.

11. Wägemodul (510A) nach einem der Ansprüche 1 bis 10,
**dadurch gekennzeichnet, dass** der obere Parallellenker (531A) und der untere Parallellenker (541A) zwischen der Wägezelle (511A) und dem Lastaufnehmer (550A) angeordnet und durch den beweglichen Parallelschenkel (532A, 542A) mit dem Kraftübertragungsgestänge (560A) verbunden ist.

12. Wägemodul nach einem der Ansprüche 1 bis 10, **dadurch gekennzeichnet, dass** der obere Parallellenker (131A) zwischen der Wägezelle (111A) und dem Lastaufnehmer (150A) angeordnet, mit dem Kraftübertragungsgestänge (160A) durch einen oberen beweglichen Parallelschenkel (132A) verbunden ist und der untere Parallellenker (141A) auf der dem Lastaufnehmer (150A) abgewandten Seite der Wägezelle (111A) angeordnet mit dem in Lastrichtung über die Wägezelle (111A) hinaus verlängerten Kraftübertragungsgestänge (160A) durch einen unteren beweglichen Parallelschenkel (142A) verbunden ist.

13. Verwendung einer Mehrzahl von Wägemodulen (110A, 110B) nach einem der Ansprüche 1 bis 12 in einer Vorrichtung zum Wiegen gleichgearteter Wägegüter (100), **dadurch gekennzeichnet, dass** die Wägemodule (110A, 110B) in einer vorgegebenen räumlichen oder flächigen Anordnung miteinander starr verbunden sind.

14. Verwendung nach Anspruch 13, **dadurch gekennzeichnet, dass** die Wägezellengehäuse von mindestens zwei Wägemodulen (610A, 610B) monolithisch miteinander verbunden sind.

15. Verwendung nach einem der Ansprüche 13 oder 14, **dadurch gekennzeichnet, dass** mehrere oder alle oberen Parallellenker (531A) mit einer oder mehreren, einen oberen feststehenden Parallelschenkelverbund (533) für die oberen Parallellenker (531A) bildenden Platten und mehrere oder alle unteren Parallellenker (541A) mit einer oder mehreren, einen unteren feststehenden Parallelschenkelverbund (543) der unteren Parallellenker (541A) bildenden Platten verbunden sind.

16. Verwendung nach Anspruch 13 oder 14 **dadurch gekennzeichnet, dass** alle Teile der oberen Parallelführungsmembranen (530A, 530B,...) monolithisch miteinander verbunden in einer Platte angeordnet sind und dass alle Teile der unteren Parallelführungsmembranen (540A, 540B,...) monolithisch miteinander verbunden in einer Platte angeordnet sind, wobei jede obere Parallelführungsmembran (530A, 530B,...) beziehungsweise untere Parallelführungsmembran (540A, 540B,...) durch die Platten orthogonal zu ihrer ausgedehnten Ebene und/oder parallel zu ihrer ausgedehnten Ebene durchtrennende materialfreie Bereiche gebildet ist.

17. Verwendung nach einem der Ansprüche 13 bis 16, **dadurch gekennzeichnet, dass** die Wägemodule (710A, 710B,...) in einer oberen Ebene (701), und die Wägemodule (710U, 710V,...) in mindestens einer unteren Ebene übereinander angeordnet sind, wobei in der oberen Ebene 701 die Wägemodule (710A, 710B,...) und in der unteren Ebene 702 die Wägemodule (710U, 710V,...) jeweils eine Reihen- und/oder Flächenanordnung bilden.

18. Verwendung nach Anspruch 17, **dadurch gekennzeichnet, dass** die Wägemodule (710A, 710B,...) der oberen Ebene (701) gegenüber den Wägemodulen (710U, 710V,...) der unteren Ebene (702) versetzt angeordnet sind.

## Claims

1. Weighing module (110A) comprising a load receiver (150A) and a weighing cell (111 A) that are connected to each other by a force-transmitting rod (160A), wherein the weighing module (110A) is arranged inside a design space (112A) whose dimensions in a plane extending orthogonal to the load direction are limited by the design spaces (112B) occupied by neighboring weighing cells (111 B) or represent the largest dimension of the weighing cell (111A) in said plane, and wherein said weighing cell (111A) comprises a parallel-guiding mechanism (130A, 140A) which has at least one movable parallel leg (132A, 142A) connected to the force-transmitting rod (160A) and at least one stationary parallel leg (133A, 143A), and wherein said parallel legs (132A, 142A, 133A, 143A) are arranged relative to each other at a predefined guiding distance and are connected to each other by at least one upper parallel-guiding member (131A) and at least one lower parallel-guiding member (141 A), **characterized in that** as a means to reduce the minimally required displacing force on the movable parallel leg (132A, 142A) while the dimensions of the weighing module (111A, 111 B) are kept as small as possible in the direction orthogonal to the load,
• the actual stretched-out length or length of the bending-stress-neutral core fibers of the parallel-guiding members (131 A, 141A) inclusive of the connecting areas to the parallel legs and, if applicable, inclusive of the thin flexure joints (338) belonging to the parallel-guiding members (131A, 141A) is larger than said guiding distance, and
• the movable parallel leg (132A, 142A) does not protrude out of the design space (112A).

2. Weighing module according to claim 1, **characterized in that** the at least one upper parallel-guiding member (331) and the at least one lower parallel-guiding member (341) are configured meander-like in a plane that contains the load direction.

3. Weighing module according to claim 1, **characterized in that** the at least one upper parallel-guiding member (131A) together with an upper movable parallel leg (132A) and an upper stationary parallel leg (133A) are shaped into an upper parallel-guiding diaphragm (130A), and that the at least one lower parallel-guiding member (141A) together with a lower movable parallel leg (142A) and a lower stationary parallel leg (143A) are shaped into a lower parallel-guiding diaphragm (140A).

4. Weighing module according to claim 3, **characterized in that** the at least one upper parallel-guiding member (51) and the at least one lower parallel-guiding member (51) are configured meander-like in the plane that extends orthogonal to the load direction by means of perforations (56) that are cut in the direction of the load.

5. Weighing module according to claim 3, **characterized in that** the at least one upper parallel-guiding member (431) and the at least one lower parallel-guiding member (441) are configured with a meander-like pattern in the shape of a pyramid.

6. Weighing module according to claim 3, **characterized in that** the at least one upper parallel-guiding member (91) and the at least one lower parallel-guiding member (91) are formed by spiral-shaped perforations (96) that are cut in the load direction and extend from the stationary parallel leg (93) towards the movable parallel leg (92) in a plane that is orthogonal to the load direction.

7. Weighing module according to claim 3, **characterized in that** the at least one upper parallel-guiding member (11) and the at least one lower parallel-guiding member (11) are configured with a spiral pattern in the shape of a cone extending from the stationary parallel leg (13) to the movable parallel leg (12) and the movable parallel leg (12) is arranged in a plane that extends parallel to and at a distance from the plane of the stationary parallel leg (13).

8. Weighing module according to claim 3, **characterized in that** the parallel-guiding diaphragms (20, 30, 40) are profiled concentrically and that the cross-sectional profile of the parallel-guiding members is configured sawtooth-shaped (21), trapeze-shaped (31), or sinusoidal-shaped (41).

9. Weighing module according to claim 3, **characterized in that** the at least one upper parallel-guiding member (71) and the at least one lower parallel-guiding member (71) are configured in the shape of spring segments (77) by thin concentrically arranged linear cuts (76), wherein the at least two linear cuts (76) per spring segment (77) are each interrupted at least once so as to form material bridges (78) at mutually offset positions, with each material bridge (78) connecting two adjacent spring segments (77) to each other.

10. Weighing module according to one of the claims 1 to 9, **characterized in that** the at least one stationary parallel leg (23, 53, 73, ...) has a closed frame structure and/or is provided with at least one stiffening bead (97), a stiffening rib, or a rolled or folded border contour area (89).

11. Weighing module according to one of the claims 1 to 10, **characterized in that** the upper parallel-guiding member (531A) and the lower parallel-guiding member (541A) are arranged between the weighing cell (511A) and the load receiver (550A) and connected to the force-transmitting rod (560A) by the movable parallel leg (532A, 542A).

12. Weighing module according to one of the claims 1 to 10, **characterized in that** the upper parallel-guiding member (131A) is arranged between the weighing cell (111A) and the load receiver (150A), connected to the force-transmitting rod (160A) by an upper movable parallel leg (132A), and that the lower parallel-guiding member (141A) is arranged on the side of the weighing cell (111 A) that faces away from the load receiver (150A) and connected by a lower movable parallel leg (142A) to the force-transmitting rod (160A) which is extended beyond the weighing cell (111A).

13. Use of a plurality of weighing modules (110A, 110B) according to one of the claims 1 to 12 in a device for the weighing of substantially uniform weighing objects (100), **characterized in that** the weighing modules (110A, 110B) are rigidly connected to each other in a predefined spatial or two-dimensional arrangement.

14. Use according to claim 13, **characterized in that** the weighing cell housings of at least two weighing modules (610A, 610B) are monolithically connected to each other.

15. Use according to one of the claims 13 or 14, **characterized in that** some or all of the upper parallel-guiding members (531A) are connected to one or more plates that form an upper compound of stationary parallel legs (533) for the upper parallel-guiding members (531A), and that some or all of the lower parallel-guiding members (541A) are connected to one or more plates that form a lower compound of stationary parallel legs (543) for the lower parallel-guiding members (541A).

16. Use according to claim 13 or 14, **characterized in that** all of the parts of the upper parallel-guiding diaphragms (530A, 530B, ...) are arranged in monolithic connection with each other in a plate, and that all of the parts of the lower parallel-guiding diaphragms (540A, 540B, ...) are arranged in monolithic connection with each other in a plate, wherein each of the upper parallel-guiding diaphragms (530A, 530B, ...) as well as each of the lower parallel-guiding diaphragms (540A, 540B, ...) is formed by material-free spaces traversing the plate in the orthogonal direction to the plane in which the plate extends and/or parallel to the plane in which the plate extends.

17. Use according to one of the claims 13 to 16, **characterized in that** the weighing modules (710A, 710B, ...) are arranged in an upper plane (701) and the weighing modules (710U, 710V, ...) are arranged in at least one lower plane (701), said planes lying above each other, wherein the weighing modules (710A, 710B, ...) form a row and/or two-dimensional array in the upper plane (701) and the weighing modules (710U, 710V, ...) form a row and/or two-dimensional array in the lower plane (702).

18. Use according to claim 17, **characterized in that** the weighing modules (710A, 710B, ...) of the upper plane (701) are arranged at offset positions relative to the weighing modules (710U, 710V, ...) of the lower plane (702).

## Revendications

1. Module de pesage (110A) avec un récepteur de charge (150A) et avec une cellule de pesage (111A) reliée à ce récepteur de charge (150A) par une tringlerie de transmission de force (160A), dans lequel le module de pesage (110A) est agencé dans un espace de construction (112A) dont l'étendue dans le plan orthogonal au sens de charge est limitée par les espaces de construction (112B) de cellules de pesage voisines (111 B), ou correspond à la plus grande étendue de la cellule de pesage (111A) dans ce plan, et dans lequel la cellule de pesage (111A) contient un guide parallèle (130A, 140A), lequel comporte au moins une branche parallèle mobile (132A, 142A) reliée à la tringlerie de transmission de force (160A) et au moins une branche parallèle fixe (133A, 143A), et dans lequel ces branches parallèles (132A, 142A, 133A, 143A) sont disposées à une distance de guidage prédéfinie l'une par rapport à l'autre et reliées entre elles par au moins une bielle parallèle supérieure (131A) et au moins une bielle parallèle inférieure (141A), **caractérisé en ce que** comme moyen de diminution de la force de déviation minimale nécessaire de la branche parallèle mobile (132A, 142A), avec des dimensions du module de pesage (111A, 111 b) réduites au possible orthogonalement au sens de charge,
• la longueur étirée effective ou la longueur de la fibre sous contrainte de flexion neutre des bielles parallèles (131A, 141A), y compris les points d'assemblage avec les branches parallèles qui leur sont associés, et si présent, le palier de flexion de zone mince (338) appartenant à la bielle parallèle (131A, 141A), est supérieure à la distance de guidage, et
• la branche parallèle mobile (132A, 142A) ne fait pas saillie au-delà de l'espace de construction (112A).

2. Module de pesage selon la revendication 1, **caractérisé en ce que** l'au moins une bielle parallèle supérieure (331) et l'au moins une bielle parallèle inférieure (341) sont conçues en forme de méandres dans un plan contenant le sens de charge.

3. Module de pesage selon la revendication 1, **caractérisé en ce que** l'au moins une bielle parallèle supérieure (131A) est formée avec une branche parallèle mobile supérieure (132A) et une branche parallèle fixe supérieure (133A) en une membrane de guidage parallèle supérieure (130A), et **en ce que** l'au moins une bielle parallèle inférieure (141A) est formée avec une branche parallèle mobile inférieure (142A) et une branche parallèle fixe inférieure (143A) en une membrane de guidage parallèle inférieure (140A).

4. Module de pesage selon la revendication 3, **caractérisé en ce que** l'au moins une bielle parallèle supérieure (51) et l'au moins une bielle parallèle inférieure (51) sont conçues en forme de méandres dans le plan orthogonal au sens de charge, au moyen de brèches (56) tournées vers le sens de charge.

5. Module de pesage selon la revendication 3, **caractérisé en ce que** l'au moins une bielle parallèle supérieure (431) et l'au moins une bielle parallèle inférieure (441) sont conçues en forme de méandres du genre pyramides.

6. Module de pesage selon la revendication 3, **caractérisé en ce que** l'au moins une bielle parallèle supérieure (91) et l'au moins une bielle parallèle inférieure (91) agencées dans le plan orthogonal au sens de charge sont formées par des brèches hélicoïdales (96) tournées vers le sens de charge, de la branche parallèle fixe (93) à la branche parallèle mobile (92).

7. Module de pesage selon la revendication 3, **caractérisé en ce que** l'au moins une bielle parallèle supérieure (11) et l'au moins une bielle parallèle inférieure (11) sont conçues hélicoïdales et coniques, de la branche parallèle fixe (13) à la branche parallèle mobile (12), et la branche parallèle mobile (12) est agencée dans un plan parallèle espacé du plan de la branche parallèle fixe (13).

8. Module de pesage selon la revendication 3, **caractérisé en ce que** ces membranes de guidage parallèles (20, 30, 40) sont profilées concentriquement et **en ce que** le profil de section transversale des bielles parallèles est conçu en forme de dent de scie (21), de trapèze (31) ou sinusoïdal (41).

9. Module de pesage selon la revendication 3, **caractérisé en ce que** l'au moins une bielle parallèle supérieure (71) et l'au moins une bielle parallèle inférieure (71) sont formées comme des segments élastiques (77) par de fines lignes de coupe (76) disposées concentriquement, où les aux moins deux lignes de coupe (76) par segment élastique (77) sont respectivement interrompues au moins une fois pour former des âmes (78) décalées les unes par rapport aux autres, afin de relier entre eux respectivement deux segments élastiques (77) voisins.

10. Module de pesage selon l'une des revendications 1 à 9, **caractérisé en ce que** l'au moins une branche parallèle fixe (23, 53, 73, ...) présente une structure de cadre fixe et/ou est pourvue d'une moulure (97), d'une nervure de renforcement, d'un bord rabattu ou d'un chanfrein sur la région de bord (89).

11. Module de pesage (510A) selon l'une des revendications 1 à 10, **caractérisé en ce que** la bielle parallèle supérieure (531A) et la bielle parallèle inférieure (541A) sont agencées entre la cellule de pesage (511A) et le récepteur de charge (550A), et reliés à la tringlerie de transmission de force (560A) par la branche parallèle mobile (532A, 542A).

12. Module de pesage selon l'une des revendications 1 à 10, **caractérisé en ce que** la bielle parallèle supérieure (131A) est agencée entre la cellule de pesage (111 A) et le récepteur de charge (150A) et reliée à la tringlerie de transmission de force (160A) par une branche parallèle mobile supérieure (132A), et la bielle parallèle inférieure (141A) est agencée sur le côté de la cellule de pesage (111A) détourné du récepteur de charge (150A), et reliée par une branche parallèle mobile inférieure (142A) à la tringlerie de transmission de force (160A) s'étendant au-delà de la cellule de pesage (111 A) dans le sens de charge.

13. Utilisation d'une pluralité de modules de pesage (110A, 110B) selon l'une des revendications 1 à 12 dans un dispositif destiné à peser des produits à peser (100) de même nature, **caractérisée en ce que** les modules de pesage (110A, 110B) sont reliés fixement les uns aux autres dans un agencement spatial ou planaire prédéfini.

14. Utilisation selon la revendication 13, **caractérisée en ce que** les boîtiers des cellules de pesage d'au moins deux modules de pesage (610A, 610B) sont reliés les uns aux autres de façon monolithique.

15. Utilisation selon l'une des revendications 13 ou 14, **caractérisée en ce que** plusieurs ou toutes les bielles parallèles supérieures (531A) sont reliées à une ou plusieurs plaques formant un assemblage supérieur de branches parallèles fixes (533) pour les bielles parallèles supérieures (531A), et plusieurs ou toutes les bielles parallèles inférieures (541A) sont reliées à une ou plusieurs plaques formant un assemblage inférieur de branches parallèles fixes (543) des bielles parallèles inférieures (541 A).

16. Utilisation selon la revendication 13 ou 14, **caractérisée en ce que** toutes les parties des membranes de guidage parallèles supérieures (530A, 530B, ...) sont agencées en une plaque en étant reliées les unes aux autres de façon monolithique, et **en ce que** toutes les parties des membranes de guidage parallèles inférieures (540A, 540B, ...) sont agencées en une plaque en étant reliées les unes aux autres de façon monolithique, chaque membrane de guidage parallèle supérieure (530A, 530B, ...) ou chaque membrane de guidage parallèle inférieure (540A, 540B, ...) est formée par des régions exemptes de matériau séparant les plaques orthogonalement à leur plan étendu et/ou parallèlement à leur plan étendu.

17. Utilisation selon l'une des revendications 13 à 16, **caractérisée en ce que** les modules de pesage (710A, 710B, ...) sont agencés dans un plan supérieur (701), et les modules de pesage (710U, 710V, ...) sont agencés dans au moins un plan inférieur, de façon superposée, les modules de pesage (710A, 710B, ...) dans le plan supérieur (701) et les modules de pesage (710U, 710V, ...) dans le plan inférieur (702) formant respectivement un agencement en rangée et/ou surfacique.

18. Utilisation selon la revendication 17, **caractérisée en ce que** les modules de pesage (710A, 710B, ...) du plan supérieur (701) sont agencés en décalage par rapport aux modules de pesage (710U, 710V, ...) du plan inférieur (702).
